# EUROPEAN PATENT APPLICATION

(11) **EP 1 916 071 A1**
(43) Date of publication of application: **30.04.2008**
(21) Application number: 06122803.7
(22) Date of filing: 24.10.2006
(51) Int. Cl.: B25J 9/16

(54) **A motion control system comprising a network for a robot system**

(71) Applicant: ABB RESEARCH LTD., 8050 Zürich (CH)
(72) Inventor: Johannessen, Svein, NO-0376, Oslo (NO)
(74) Representative: Wihlsson, Joakim Per Magnus

(57) **Abstract**

A motion control system (21) and a robot (1) with such a motion control system (21) is described. The motion control system comprises at least one control unit (5), at least two drive units (6, 7), each comprising an associated electric motor (8, 9), and at least one first level communication network (10), which is arranged connecting the control unit (5) with the drive units (6, 7). The control unit (5) is arranged to send, on the first level communication network (10), a message (11) comprising a set of data fields grouped in a predetermined way, wherein each data field comprises control data for a particular drive unit, thus enabling each drive unit to extract control data from the data field corresponding to the drive unit and to respond to the extracted control data.

## Description

### Technical field

The present invention relates to a motion control system for a robot and to a robot being equipped with such a motion control system. The present invention also relates to a robot system comprising at least two robots and to a method for distributing information in a robot.

### Description of the prior art

Motion control systems are used in robots to control the motion of the robots. A robot comprises at least one motor which is arranged to make the robot move. By controlling the motion of the electric motor the motion of the robot may be controlled. The electric motors are usually controlled by a central control unit to which they are connected through electric wires.

In the PCT application WO 2004/028753 A2 an intelligent, self-contained robotic hand is described. The robotic hand comprises at least two electric motors with a control unit connected to each one of them. The robotic hand also comprises a network operating controller. The control units are connected in series with each other and with the network operating controller through a communication network. The network operating controller functions as a central control unit and controls the operation of the robotic hand. The control units and the network operating controller constitutes nodes on the communication network. Messages may be broadcasted on the communication network from either one of the nodes.

There are however some drawbacks with broadcasting messages on a communication network. A broadcast message is defined as a message that is received by all nodes on the communication network and may even cross boundaries to other networks, thereby creating much network traffic and much unnecessary message handling.

Thus, there is a need for an alternative motion control system for a robot which at least alleviates the problems with the motion control system of the prior art.

### Summary of the invention

An object of the present invention is to provide a motion control system, a robot, a robot system and a method which at least alleviates the problems of the prior art.

A basic idea of the present invention is to provide control units connected to a communication network, which control units only read predefined messages. In this way, the traffic on the communication network may be reduced in comparison with prior art systems with control units connected to a communication network.

A motion control system according to a first aspect of the present invention comprises at least one control unit, at least two drive units, each comprising an associated electric motor, and at least one first level communication network which is arranged connecting the control unit with the drive units, wherein the control unit is arranged to send messages on the first level communication network, and wherein the drive units are arranged to control their associated electric motor in response to messages received on the first level communication network. The motion control system is characterized in that the control unit is arranged to send, on the first level communication network, a message comprising a set of data fields grouped in a predetermined way, wherein each data field comprises control data for a particular drive unit, thus enabling each drive unit to extract control data from the data field corresponding to the drive unit and to respond to the extracted control data.

The response of a drive unit may be to move a certain amount in a certain direction.

A motion control system according to the invention provides for less traffic on the communication networks than a system according to the prior art. Since each message contains data for an entire collection of drive units, the complete collection of drive units will receive their information at the same time, thereby increasing the dynamic stability of the motion control system. Furthermore, as all drive units in principle have access to all control data sent in the message on the first level communication network, it is possible for a drive unit to take into account control data sent to the other drive unit(s) before taking any action.

The drive units may be arranged to send on the communication network a message comprising a set of data fields grouped in the predetermined way, in response to a message received on the communication network, which message requests such a response. The message sent from a drive unit then becomes available to all units connected to the first level communication network including the drive units and the control unit.

The motion control system may also comprise a second level communication network and at least one bridge node being connected to both the first level communication network and to the second level communication network. This is favourable for example in case a number of robots are to be connected into a common system, wherein each robot comprises a first level communication network.

The bridge node may be arranged to send a message, received on one of the first level communication network and the second level communication network, on the other one of the communication networks. This provides for the distribution of a message in the entire motion control system, regardless on which communication network the message is originally sent.

The motion control system may also comprise at least a first and a second position sensor which are arranged to sense the position of the first drive unit and the second drive unit, respectively. The position sensors may be arranged to send messages with information on their sensed positions at predetermined intervals in time.

According to a second aspect of the present invention a robot is provided comprising a body and at least one member being arranged on the body and being movable in relation to the body. The robot is characterized in that it comprises a motion control system according to any one of the preceding claims, wherein the drive units are arranged to control the motion of said at least one member.

At least one of the drive units in the robot may be arranged to take into account the control data in the data field for at least one other drive unit in the robot, when responding to the control data in the data field for said at least one drive unit. Such considerations will optimize the drive responses whenever a robot movement can be effectuated in more than one way.

According to a third aspect of the present invention a robot system is provided comprising a plurality of robots each comprising a body, at least one member being arranged on the body and being movable in relation to the body, at least one control unit, at least two drive units, each comprising an associated electric motor, and at least one first level communication network which is arranged connecting the control unit with the drive units. The control unit is arranged to send messages on the first level communication network, wherein the drive units are arranged to control their associated electric motor in response to messages received on the first level communication network. The robot system is characterized in that the control unit in each robot is arranged to send, on the first level communication network, a message comprising a set of data fields grouped in a predetermined way, wherein each data field comprises control data for a particular drive unit, thus enabling each drive unit to extract control data from the data field corresponding to the drive unit and to respond to the extracted control data.

A robot system according to the third aspect of the present invention provides the same advantages as has been described above in relation to the first aspect and the second aspect of the present invention.

The robot system may comprise a second level communication network, and a bridge node in each robot which is connected to the first level communication system as well as the second level communication network.

According to a fourth aspect of the present invention a method is provided for distributing information in a robot comprising a body, at least one member being arranged on the body and being movable in relation to the body, at least one control unit, at least two drive units, each comprising an associated electric motor, and at least one first level communication network which is arranged connecting the control unit with the drive units. The control unit is arranged to send messages on the first level communication network, and the drive units are arranged to control their associated electric motor in response to messages received on the first level communication network. The method is characterized by the steps of sending from the control unit, on the first level communication network, a message comprising a set of data fields grouped in a predetermined way, wherein each data field comprises control data for a particular drive unit, extracting at each drive unit control data from the data field corresponding to the drive unit, and responding in each drive unit to the extracted control data.

In the following preferred embodiments of the invention will be described with reference to the appended drawings.

### Short description of the drawings

Fig 1 shows schematically a robot according to an embodiment of the present invention.

Fig 2 shows schematically a robot system comprising a number of robots.

Fig 3 shows schematically the layout of the motion control system in the robot system in Fig 2.

Fig 4 shows schematically a message used to communicate in a robot, a robot system and a motion control system according to the present invention.

Fig 5 shows schematically the motion control system in the robot in Fig 1.

### Description of preferred embodiments of the invention

In the following description of preferred embodiments of the invention the same reference numerals will be used for similar features in the different drawings.

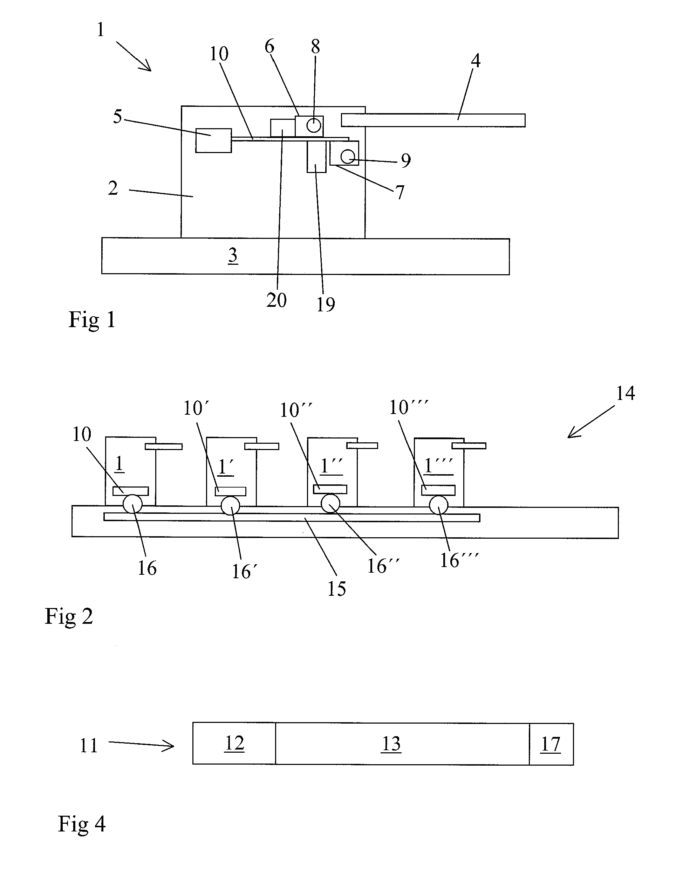

Fig 1 shows schematically a robot 1 according to an embodiment of the present invention. The robot 1 has a body 2 which is fixed to a floor 3 and a member in the form of a arm 4 which is arranged on the body 2 and which is movable in relation to the body 2. The robot 1 comprises a motion control system which comprises at least one control unit 5 and at least a first drive unit 6 comprising at least one motor 8 and a second drive unit 7 comprising at least one motor 9, which is arranged to control the motion of a part of the arm 4. The drive units 6, 7, control the motion of the motors 8, 9. The motion control system also comprises a first level communication network 10 which is arranged connecting the control unit 5 with the drive units 6, 7. The control unit 5 is arranged to send messages 11 (shown in Fig 4) on the first level communication network, which messages each comprises a first data field 12, a second data field 13 and a third data field 17. The drive units 6, 7 are arranged to control the motors based on control data in the messages 11. Each drive unit 6, 7 is arranged to read information from at least one of the data fields of the message. Each drive unit 6, 7, further arranged to respond to control data read from the corresponding data field 12, 13, 17. The drive units 6, 7, are also arranged to send a message 11 on the communication network, upon receiving a control data from the data field with such a request. The motion control system also comprises a first position sensor 19 and a second position sensor 20, which are arranged connected to the first level communication network, and arranged to monitor the position of the arm 4.

In operation the control unit 5 sends a message 11, comprising a first data field 12, a second data field 13 and a third data field 17, on the first level communication network 10. The first drive unit 6 reads the control data from the first data field 12 and performs the action defined by the control data. The second drive unit also receives the message 11 and takes similar action.

Fig 2 shows schematically a robot system 14 comprising four robots 1, 1', 1'', 1'''. Each robot 1, 1',1'', 1''', is arranged as described in relation to Fig 1. The robot system 14 comprises a second level communication network 15. Each robot also comprises a bridge node 16, 16', 16'', 16''', also known as a router, wherein each bridge node 16, 16', 16'', 16''', is connected to the second level communication network 15 as well as the first level communication network in the robot 1. In order not to burden the drawing no position sensors are shown in the motion control system shown in Fig 2. The robot system 14 in Fig 2 may comprise a position sensor 19 as shown in Fig 1.

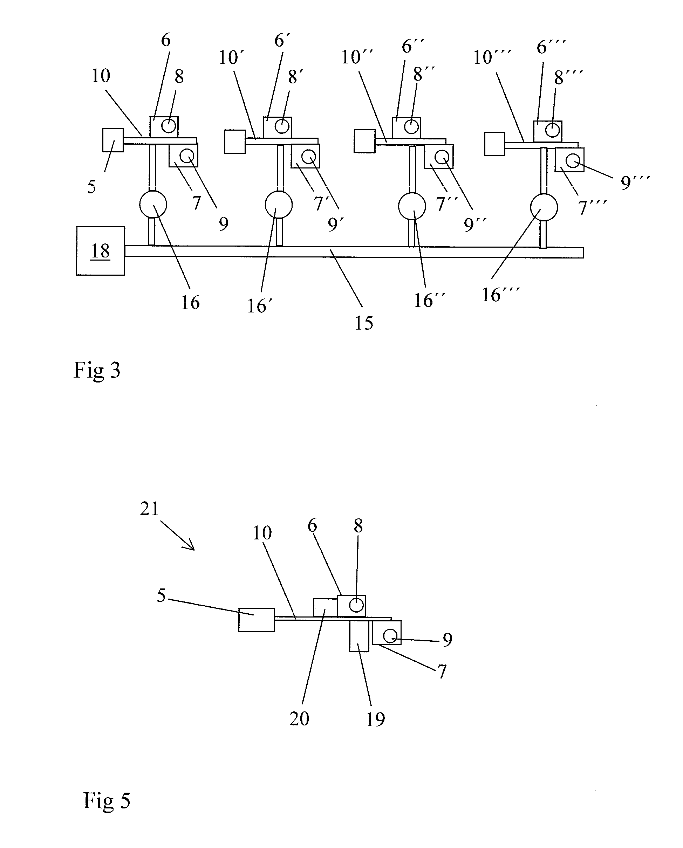

Fig 3 shows schematically the layout of the motion control system in the robot system in Fig 2. Each one of the robots 1 comprises a first level communication network 10, 10', 10'', 10''', to which the drive units 6, 6', 6'', 6''', 7, 7', 7'', 7''', the control unit 5, 5', 5'', 5''', and the bridge node 16, 16', 16'', 16''', are connected. Each drive unit 6, 6', 6'', 6''', 7, 7', 7'', 7''', has a respective set of codes. The motion control system also comprises a second level communication network 15 to which all the bridge nodes 16, 16', 16'', 16''', are connected. Also connected to the second level communication network 15 is a central control unit 18. In order not to burden the drawing no position sensors are shown in the motion control system shown in Fig 3.

Fig 4 shows schematically a message used to communicate in a robot, a robot system and a motion control system according to the present invention. The message 11 comprises a first data field 12, a second data field 13 and a third data field 17. Each one of the data fields comprises control data.

The operation of the robot system in Fig 2 will now be described with reference to Fig 2, Fig 3 and Fig 4. The central control unit 18 may send a message 11 on the second level communication network 15. Each one of the bridge nodes 16, 16', 16'', 16''' receives the message 11 and transmits the message on their respective first level communication network 10, 10', 10'', 10'''. The drive units 6, 6', 6'', 6''', 7, 7', 7'', 7''', all receive the message 11 and read the control data from the data field corresponding to their group.Each drive unit then performs the action corresponding to the control data read from the corresponding data field.

When the first drive unit 6, in the first robot 1 sends a message on the first level communication network 10 the message is sent via the first bridge node 16 to the second level communication system and via the other bridge nodes 16', 16'', 16''', to the other first level communication networks 10',10'', and 10''' and the drive units connected to the first level communication networks.

The action that is performed may, e.g., be to move the arm 4 from a first position to a second position. In the robot system shown in Fig 2, it may be favourable for all drive units to read all control data concerning movement of any one of the arms 4, 4', 4'', 4''', as the requested movement of one arm may be hindered by one of the other arms. Thus, each drive unit may be arranged to register all movements of the other drive units and to take this information into account before performing any movement. In this way collisions with any of the other arms (4, 4', 4'', 4''') may be avoided. If this is the case the drive unit may decide not to move.

Fig 5 shows schematically the motion control system 21 in the robot in Fig 1. The motion control system 21 comprises at least one control unit 5 and at least a first drive unit 6 comprising at least one motor 8 and a second drive unit 7 comprising at least one motor 9. The function of the motion control system was described above in relation to Fig 1.

The described embodiments may be amended in many ways without departing from the spirit and scope of the present invention which is limited only by the appended claims.

Even though position sensor are not shown in all the described embodiments it is nevertheless possible to include such position sensors in all the embodiments described above.

It is possible to have an arbitrary number of drive units and position sensors arranged on a first level communication network according to the invention.

It is possible to have more than two levels of communication networks. A robot according to the present invention may have an arbitrary number of levels of communication networks.

## Claims

1. A motion control system (21) comprising at least one control unit (5), at least two drive units (6, 7), each comprising an associated electric motor (8, 9), and at least one first level communication network (10), which is arranged connecting the control unit (5) with the drive units (6, 7), wherein the control unit (5) is arranged to send messages on the first level communication network (10), and wherein the drive units (6, 7) are arranged to control their respective electric motor (8, 9) in response to messages (11) received on the first level communication network (10), **characterized in that** the drive units (5) are arranged in different groups each comprising at least one drive unit, and **in that** the control unit (5) is arranged to send, on the first level communication network (10), a message (11) comprising a set of data fields grouped in a predetermined way, wherein each data field comprises control data for a particular drive unit, thus enabling each drive unit to extract control data from the data field corresponding to the drive unit and to respond to the extracted control data.

2. The motion control system (21) according to claim 1, wherein the drive units (6, 7) are arranged to send on the communication network a message (11) comprising a set of data fields grouped in the predetermined way, in response to a message (11) received on the communication network, which message (11) requests such a response.

3. The motion control system (21) according to claim 1 or 2, also comprising a second level communication network (15) and at least one bridge node (16, 16', 16", 16"') being connected to both the first level communication network (10) and to the second level communication network (15).

4. The motion control system (21) according to claim 3, wherein the bridge node (16, 16', 16'', 16''') is arranged to send a message (11), received on one of the first level communication network (10) and the second level communication network (15), on the other one of the communication networks (10, 15).

5. The motion control system (21) according to any one of the preceding claims, also comprising at least a first position sensor (19) and a second position sensor (20), which are arranged connected to the first level communication network (10) and which are arranged to sense a position of the first drive unit (6) and the second drive unit (20), respectively.

6. A robot (1) comprising a body (2) and at least one member (4) being arranged on the body (2) and being movable in relation to the body (2), **characterized in that** the robot comprises a motion control system (21) according to any one of the preceding claims, wherein the drive units (6, 7) are arranged to control the motion of said at least one member (4).

7. The robot (1) according to claim 6, wherein at least one of the drive units (6, 7) is arranged to take into account the control data in the data field for at least one other drive unit (6, 7) in the robot (1), when responding to the control data in the data field for said at least one drive unit (6, 7).

8. A robot system (14) comprising a plurality of robots (1) each comprising a body (2), at least one member (4) being arranged on the body (2) and being movable in relation to the body (2), at least one control unit (5), at least two drive units (6, 7), each comprising an associated electric motor (8, 9), and at least one first level communication network (10) which is arranged connecting the control unit (5) with the drive units (6, 7), wherein the control unit (5) is arranged to send messages (11) on the first level communication network (10), and wherein the drive units (6, 7) are arranged to control their associated electric motor (8, 9) in response to messages (11) received on the first level communication network (10), **characterized in that** the control unit (5) in each robot (1) is arranged to send, on the first level communication network (10), a message (11) comprising a set of data fields grouped in a predetermined way, wherein each data field comprises control data for a particular drive unit, thus enabling each drive unit to extract control data from the data field corresponding to the drive unit and to respond to the extracted control data.

9. The robot system (14) according to claim 8, comprising a second level communication network (15), and a bridge node (16, 16', 16'', 16''') in each robot (1) which is connected to the first level communication network (10) as well as the second level communication network (15).

10. A method for distributing information in a robot (1) comprising a body (2), at least one member (4) being arranged on the body (2) and being movable in relation to the body (2), at least one control unit (5), at least two drive units (6, 7), each comprising an associated electric motor (8, 9), and at least one first level communication network (10) which is arranged connecting the control unit (5) with the drive units (6, 7), wherein the control unit (5) is arranged to send messages (11) on the first level communication network (10), and wherein the drive units (6, 7) are arranged to control their associated electric motor (8, 9) in response to messages (11) received on the first level communication network (10), **characterized by** the steps of
sending from the control unit, on the first level communication network (10), a message (11) comprising a set of data fields grouped in a predetermined way, wherein each data field comprises control data for a particular drive unit,
extracting at each drive unit control data from the data field corresponding to the drive unit, and
responding in each drive unit (6, 7) to the extracted control data.
